# EUROPÄISCHE PATENTSCHRIFT

(11) **EP 0 952 382 B1**
(45) Veröffentlichungstag und Bekanntmachung des Hinweises auf die Patenterteilung: **30.11.2005**
(21) Anmeldenummer: 99400729.2
(22) Anmeldetag: 25.03.1999
(51) Int. Cl.: F16L 59/14, F16L 59/06, F16L 11/20

(54) **Flexibles Leitungsrohr**
Flexible conduit
Conduite flexible

(30) Priorität: 23.04.1998 DE 19818167
(43) Veröffentlichungstag der Anmeldung: 27.10.1999
(73) Patentinhaber: Nexans, 75008 Paris (FR)
(72) Erfinder: Schippl, Klaus, Dipl.-Ing., 30659 Hannover (DE)
(74) Vertreter: Döring, Roger

(56) Entgegenhaltungen:
- US-A- 3 240 234
- US-A- 3 565 118
- US-A- 3 595 275
- US-A- 4 984 605

## Beschreibung

Die Erfindung betrifft ein flexibles Leitungsrohr nach dem Oberbegriff des Anspruchs 1.

Für das Umpumpen von tiefkaltem, verflüssigtem Gas von einem Förderschiff auf ein Transportschiff wird ein thermisch isoliertes Leitungssystem benötigt, welches bei einer Temperatur von etwa -160 ° C flexibel und gut isolierend ist.

Aus der DE 25 29 259 A1 ist eine Rohrleitung zum Transport von flüssigen oder gasförmigen gekühlten Medien zwischen zwei beweglichen auf dem Meer schwimmenden Objekten bekannt, bei dem ein oder mehrere wärmeisolierte Leitungsrohre parallel zu einem Tragseil angeordnet sind. An dem Tragseil sind Beschwerungselemente befestigt, die dafür sorgen, daß die Rohrleitung die beiden Objekte miteinander verbindet. Das wärmeisolierte Leitungsrohr besteht hier aus zwei konzentrischen gewellten Metallrohren, zwischen denen sich eine Wärmeisolationsschicht auf der Basis von Polyurethanschaum befindet.

Abgesehen davon, daß diese Rohrkonstruktion recht aufwendig ist, hat sich gezeigt, daß der verwendete lsolierstoff Polyurethanschaum bei Temperaturen unterhalb -120 ° C spröde wird und bei Biegebewegungen des Rohrsystems zerbröselt und dadurch ein Großteil seiner Isoliereigenschaften verliert.

Aus der US 4,984,605 A ist ein Leitungsrohr für tiefkalte Medien bekannt, welches aus zwei konzentrischen gewellten Metallrohren besteht, zwischen denen eine Isolierschicht vorgesehen ist. Auf dem Innenrohr liegt ein wendelförmig aufgebrachter Abstandshalter, auf den eine sogenannte Superisolierungsschicht derart aufgewickelt ist, daß zwischen der Superisolierungsschicht und dem Innenrohr ein Ringspalt verbleibt. Unter einer Superisolierung wird in Fachkreisen ein Gebilde verstanden, welches aus wechselweisen Lagen von Metallfolien und Folien aus einem Vlies besteht. Der Ringspalt dient dazu, den Evakuierungsprozeß insbesondere bei großen Rohrlängen zu beschleunigen.

Die US-A-3 595 275 beschreibt ein flexibles Leitungsrohr, bestehend aus einem inneren gewellten Metallrohr, einem im Abstand zum inneren Metallrohr angeordneten äußeren gewellten Metallrohr und einer Abstandshalterung, wobei im Ringspalt zwischen den Rohren ein Druck vorherrscht, der unterhalb des Atmosphärendrucks liegt. Die Abstandshalterung besteht aus zwei mit gegenläufiger Wickelrichtung auf das Innenrohr aufgebrachten Strängen, welche aus einem Streifen aus einer inneren Lage von umgebundenen isolierenden Fasern besteht, welcher in einem Band aus abriebfestem Material angeordnet ist. Der Streifen ist von einem wendelförmig aufgebrachten Strang umgeben, der die Lage aus Fasern und das Band aus abriebfesten Material zusammenhalten soll.

Die bekannten Leitungsrohre finden Anwendung für den Transport von flüssigem Stickstoff, Helium und Sauerstoff. Sie sind sehr kostspielig in der Herstellung, da der Evakuierungsprozeß trotz der vorgenommenen Maßnahmen wegen des erforderlich hohen Evakuierungsgrades recht langwierig ist.

Der Erfindung liegt von daher die Aufgabe zugrunde, ein Leitungsrohr anzugeben, welches flexibel und in großen Längen herstellbar ist und welches bei Temperaturen von weniger als -100 ° C einsetzbar ist, ohne daß die thermischen Isoliereigenschaften Schaden nehmen.

Diese Aufgabe wird durch die im Kennzeichen des Anspruchs 1 aufgeführten Merkmale gelöst.

Der wesentliche Vorteil der Erfindung ist darin zu sehen, daß die mit gegenläufiger Wickelrichtung aufgebrachten Stränge wegen der punktuellen Berührungsflächen und der Materialauswahl eine gute Isolierwirkung erbringen und darüberhinaus ein biegestabiles und schwingungsfestes Rohrsystem bereitstellen.

Das als Band aufgebrachte Vliesmaterial füllt die Zwischenräume bis zu 90 % aus, wodurch das Vakuum auf einen Wert zwischen 10⁻¹ und 10⁻³ mbar eingestellt werden kann, da die Wärmeübertragung durch Konvektion wegen der Ausfüllung der Zwischenräume verringert ist. Der Wärmeeintrag in das erfindungsgemäße Rohrsystem ist höher als bei einer klassischen Hochvakuumisolierung mit Superisolierungsfolien, aber weitaus geringer als bei Schaumstoffisolierungssystemen.

Die Kosten für das erfindungsgemäße Leitungsrohr liegen wesentlich niedriger als bei der klassischen Hochvakuumisolierung, aber nur geringfügig höher als bei einer Schaumstoffisolierung.

Weitere vorteilhafte Ausgestaltungen der Erfindung sind in den Unteransprüchen erfaßt.

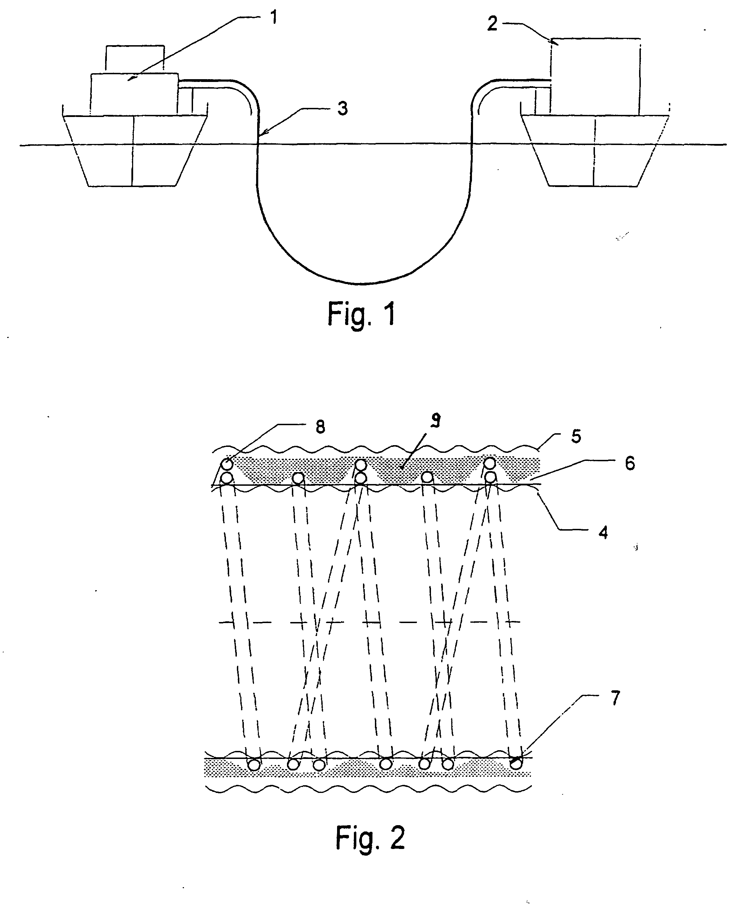

Die Erfindung ist anhand der in den Figuren 1 und 2 schematisch dargestellten Ausführungsbeispiele näher erläutert.

In der Figur ist ein Schiff 1 dargestellt, welches fest verankert ist und als Förderschiff wirkt. Mit Hilfe des Förderschiffes 1 wird in der Regel das Erdgas im Gaszustand gefördert und durch Temperaturabsenkung in Flüssiggas umgewandelt. Die Verflüssigung des Erdgases hat sich aus transporttechnischen Gründen und Sicherheitsgründen als unumgänglich erwiesen. Das Flüssiggas wird mittels eines Transportschiffes 2 zu den Verbrauchsorten transportiert.

Um ein Laden des Transportschiffes auch bei hohem Seegang zu ermöglichen, muß die Verbindungsleitung 3 zwischen den Schiffen 1 und 2 in der Lage sein, die gegenseitigen Bewegungen der Schiffe 1 und 2 aufzufangen. Darüberhinaus muß die Verbindungsleitung 3 sehr gut wärmeisoliert sein.

Die Figur 2 zeigt einen seitlichen Schnitt durch das erfindungsgemäße Leitungsrohr, welches als Verbindungsleitung 3 bei einer Anwendung nach Figur 1 verwendet wird.

Das Leitungsrohr besteht aus einem Innenrohr 4 sowie einem konzentrisch zum Innenrohr 4 angeordneten Außenrohr 5. Mit 6 ist der Ringspalt zwischen den Rohren 4 und 5 bezeichnet. Auf dem Außenrohr 5 kann noch ein nicht dargestellter Außenmantel aus einem seewasserbeständigen abriebfesten Kunststoff angeordnet sein.

Die Rohre 4 und 5 sind längsnahtgeschweißte Rohre aus Metall, vorzugsweise aus einem nichtrostenden Stahl, und sind mit einer ring- oder schraubenlinienförmigen Wellung versehen, welche das Rohrsystem flexibel macht. Solche Rohre können in großen Längen hergestellt werden und können wie elektrische Kabel auf Kabeltrommeln aufgewickelt und zum Anwendungsort verschickt werden. Der Abstand zwischen den Rohren 4 und 5 wird durch eine Abstandhalterung aufrechterhalten, welche aus einem ersten auf das Innenrohr 4 aufgewickelten Strang 7 sowie einem zweiten mit gegenläufiger Wickelrichtung auf den inneren Strang 7 aufgewickelten Strang 8 besteht. Die Stränge 7 und 8 sind Rundstränge aus faserverstärktem Polyester. Der erste Strang 7 ist mit einer relativ kurzen Schlaglänge aufgewickelt. Der zweite Strang 8 ist mit einer größeren Schlaglänge als der erste Strang 7 aufgewickelt. Daraus resultiert, daß wenige Kreuzungspunkte zwischen den Strängen 7 und 8 entstehen, so daß die Wärmeleitung zwischen den Rohren 4 und 5 extrem niedrig ist. Da es sich bei den Strängen 7 und 8 um Rundstränge handelt, ergeben sich nur punktuelle Berührungen.

Der Freiraum zwischen den Rohren 4 und 5 und den Windungen der Stränge 7 und 8 ist mit mehreren Lagen eines Bandes 9 aus Vliesmaterial zu ca. 90 % ausgefüllt. Vliesmaterial hat von Haus aus eine geringe Wärmeleitung. Durch die nahezu vollständige Füllung des Ringspaltes 6 mit Vliesmaterial wird eine Konvektion ebenfalls unterbunden.

Im Einsatz ist der Ringspalt 6 mit einem Unterdruck von 10⁻¹ bis 10⁻³ mbar beaufschlagt.

Der Unterdruck kann beispielsweise werksseitig aufgebracht werden, d. h. eine Rohrlänge ist an beiden Enden druckdicht abgeschottet und wird am Verwendungsort an die an den Schiffen 1 und 2 angebrachten Armaturen angeschlossen. Alternativ kann die Rohrlänge zum Verwendungsort transportiert, dort angeschlossen und anschließend der Evakuierungsprozeß durchgeführt werden.

Da das Leitungsrohr auch im gefüllten Zustand leichter als Seewasser ist, können an dem Leitungsrohr in nicht dargestellter Weise Beschwerungselemente angebracht werden, so daß das Leitungsrohr die Schiffe 1 und 2 in Form einer Kettenlinie verbindet.

Die Abmessungen für ein Leitungsrohr gemäß der Lehre der Erfindung betragen beispielsweise:

| | |
|---|---|
| Außendurchmesser des Außenrohres | 298 mm |
| Innendurchmesser des Außenrohres | 264 mm |
| Außendurchmesser des Innenrohres | 220 mm |
| lnnendurchmesser des Innenrohres | 198 mm |
| Durchmesser der Stränge | 8 mm |
| Schlaglänge des inneren Stranges | 100 mm |
| Schlaglänge des äußeren Stranges | 200 mm |
| Wanddicke des Außenrohres | 1,6 mm |
| Wanddicke des Innenrohres | 1,2 mm |

## Patentansprüche

1. Flexibles Leitungsrohr, bestehend aus einem inneren gewellten Metallrohr, einem im Abstand zum inneren Rohr angeordneten äußeren gewellten Metallrohr und einer Abstandhalterung sowie einem Isoliermaterial zwischen dem inneren und dem äußeren Metallrohr wobei im Ringspalt zwischen den Rohren ein Druck vorherrscht, der unterhalb des Atmosphärendrucks liegt, **gekennzeichnet durch** folgende Merkmale
a) die Abstandhalterung besteht aus zwei mit gegenläufiger Wickelrichtung auf das Innenrohr (4) aufgebrachten Strängen (7,8) aus faserverstärktem Kunststoff wobei die Stränge (7,8) einen runden Querschnitt aufweisen
b) das Isoliermaterial (9) ist ein Vliesmaterial
c) der Druck im Ringspalt (6) liegt zwischen 10⁻³ und 10⁻¹ mbar.

2. Flexibles Leitungsrohr nach Anspruch 1, **dadurch gekennzeichnet, daß** sowohl das Innen-(4) als auch das Außenrohr (5) aus nichtrostendem Stahl bestehen.

3. Flexibles Leitungsrohr nach Anspruch 1 oder 2, **dadurch gekennzeichnet, daß** die Stränge (7,8) aus glasfaserverstärktem Kunststoff, vorzugsweise glasfaserverstärktem Polyester oder Epoxy bestehen.

4. Flexibles Leitungsrohr nach einem der Ansprüche 1 bis 3, **dadurch gekennzeichnet, daß** das Isoliermaterial (9) aus um das Innenrohr (4) herumgewickelten Bändern aus Vliesstoff besteht.

5. Flexibles Leitungsrohr nach einem der Ansprüche 1 bis 4, **dadurch gekennzeichnet, daß** der Ringspalt (6) zu 70 - 95 % mit Isoliermaterial (9) ausgefüllt ist.

6. Flexibles Leitungsrohr nach einem der Ansprüche 1 bis 5, **dadurch gekennzeichnet, daß** der Spalt (6) zwischen Innen-(4) und Außenrohr (5) zwischen 3 und 10 % vom Außendurchmesser des Außenrohres (5) beträgt.

7. Flexibles Leitungsrohr nach einem der Ansprüche 1 bis 6, **dadurch gekennzeichnet, daß** der innere Strang (7) mit einer Schlaglänge auf das Innenrohr (4) aufgebracht ist, die dem 3- bis 20-fachen des Abstandes zwischen Innen-(4) und Außenrohr (5) entspricht.

8. Flexibles Leitungsrohr nach einem der Ansprüche 1 bis 7, **dadurch gekennzeichnet, daß** der äußere Strang (8) mit einer Schlaglänge um das Innenrohr (4) gewickelt ist, die doppelt so groß ist wie die Schlaglänge des inneren Stranges (7).

## Claims

1. Flexible conduit, comprising an inner corrugated metal tube, an outer corrugated metal tube, arranged at a distance from the inner tube, and a spacer means, as well as an insulating material between the inner and outer metal tubes, with a pressure which is below atmospheric pressure prevailing in the annular gap between the tubes, **characterized by** the following features:
a) the spacer means comprises two strands (7, 8) of fibre-reinforced plastic applied to the inner tube (4) wound in opposite directions, the strands (7, 8) being round in cross section,
b) the insulating material (9) is a nonwoven material,
c) the pressure in the annular gap (6) is between 10⁻³ and 10⁻¹ mbar.

2. Flexible conduit according to Claim 1, **characterized in that** both the inner tube (4) and the outer tube (5) consist of stainless steel.

3. Flexible conduit according to Claim 1 or 2, **characterized in that** the strands (7, 8) consist of glass-fibre-reinforced plastic, preferably glass-fibre-reinforced polyester or epoxy.

4. Flexible conduit according to one of Claims 1 to 3, **characterized in that** the insulating material (9) consists of strips of nonwoven wound around the inner tube (4).

5. Flexible conduit according to one of Claims 1 to 4, **characterized in that** the annular gap (6) is 70-95% filled with insulating material (9).

6. Flexible conduit according to one of Claims 1 to 5, **characterized in that** the gap (6) between inner tube (4) and outer tube (5) amounts to between 3 and 10% of the external diameter of the outer tube (5).

7. Flexible conduit according to one of Claims 1 to 6, **characterized in that** the inner strand (7) is applied to the inner tube (4) with a length of twist which corresponds to from 3 to 20 times the distance between inner tube (4) and outer tube (5).

8. Flexible conduit according to one of Claims 1 to 7, **characterized in that** the outer strand (8) is wound around the inner tube (4) with a length of twist which is double the length of twist of the inner strand (7).

## Revendications

1. Conduite flexible, se composant d'un tube métallique interne ondulé, d'un tube métallique externe ondulé espacé du tube interne et d'un dispositif d'espacement ainsi que d'un matériau isolant entre le tube métallique interne et le tube métallique externe, une pression régnant dans l'espace annulaire entre les tubes, laquelle est en dessous de la pression atmosphérique, **caractérisée par** les caractéristiques suivantes :
a) le dispositif d'espacement se compose de deux torons (7, 8) en matériau plastique renforcé par des fibres placés suivant un enroulement en sens inverse sur le tube interne (4), les torons (7, 8) présentant une section transversale ronde,
b) le matériau isolant (9) est un matériau non tissé,
c) la pression dans l'espace annulaire (6) est comprise entre 10⁻¹ et 10⁻³ mbars.

2. Conduite flexible selon la revendication 1, **caractérisée en ce que** le tube interne (4) et le tube externe (5) se composent tous deux d'acier inoxydable.

3. Conduite flexible selon la revendication 1 ou 2, **caractérisée en ce que** les torons (7, 8) se composent de plastique renforcé par des fibres de verre, de préférence de polyester ou d'époxy renforcé par des fibres de verre.

4. Conduite flexible selon l'une quelconque des revendications 1 à 3, **caractérisée en ce que** le matériau isolant (9) se compose de bandes de matériau non tissé enroulées autour du tube interne (4).

5. Conduite flexible selon l'une quelconque des **revendications 1 à 4, caractérisée en ce que** l'espace annulaire (6) est rempli jusqu'à 70-95% de matériau isolant (9).

6. Conduite flexible selon l'une quelconque des revendications 1 à 5, **caractérisée en ce que** l'espace (6) entre le tube interne (4) et le tube externe (5) constitue entre 3 et 10% du diamètre extérieur du tube externe (5).

7. Conduite flexible selon l'une quelconque des revendications 1 à 6, **caractérisée en ce que** le toron interne (7) est appliqué sur le tube interne (4) avec une longueur de pas qui correspond à 3 à 20 fois la distance entre le tube interne (4) et le tube externe (5).

8. Conduite flexible selon l'une quelconque des revendications 1 à 7, **caractérisée en ce que** le toron externe (8) est enroulé autour du tube interne (4) avec une longueur de pas qui est deux fois plus grande que la longueur de pas du toron interne (7).
